# EUROPEAN PATENT SPECIFICATION

(11) **EP 0 892 354 B1**
(45) Date of publication and mention of the grant of the patent: **14.09.2005**
(21) Application number: 97112142.1
(22) Date of filing: 16.07.1997
(51) Int. Cl.: G06F 17/30

(54) **Efficient representation and transmission of objects with variants**
Effiziente Darstellung und Uebertragung von Objekten mit Varianten
Représentation et transmission efficace d'objets avec variantes

(43) Date of publication of application: 20.01.1999
(73) Proprietor: Sony International (Europe) GmbH, 10785 Berlin (DE)
(72) Inventor: Rosinus, Michael, Sony Int. (Europe) GMBH, 70736 Fellbach (DE); Kovacs, Ernö, c/o Sony int. (Europe) GmbH, 70736 Fellbach (DE)
(74) Representative: Rupp, Christian

(56) References cited:
- EP-A- 0 599 097
- EP-A- 0 599 098
- US-A- 5 218 455
- US-A- 5 499 365
- US-A- 5 557 790
- US-A- 5 630 138
- PATENT ABSTRACTS OF JAPAN vol. 095, no. 009, 31 October 1995 & JP 07 152633 A (FUJITSU LTD), 16 June 1995,
- PATENT ABSTRACTS OF JAPAN vol. 097, no. 004, 30 April 1997 & JP 08 339321 A (HITACHI LTD;HITACHI SYST ENG KK), 24 December 1996,

## Description

The present invention relates to a method and a device for storing data objects to provide for an efficient representation of objects with variants and transmission over a wireless network. The invention relates particularly to the way information objects are handled, transformed, transmitted and stored between different data processing apparatus connected with a communication network.

In the sense of the present description a data object is to be understood as related data. A data object therefore for example can be a image, text information or combined text/audio/image-information.

US 5,499,365 discloses a system and method for controlling versions of selected objects in an object oriented computing system including a common logical key attribute in each version of an object that is used to identify all versions of an object. The object frame of each version also includes a unique combination of an insert sequence attribute and an extract sequence attribute. The unique combination of insert sequence attribute and extract sequence attribute allows the selection of a unique version of an object based on time. In order to select one or more versions of an identified object, a version time is converted into a selection sequence value. The selection sequence value is then compared to the insert sequence attributes and extract sequence attributes in order to select at least one of the versions of the selected objects. Each version may also include a perspective attribute for providing another selection criteria for selecting one or more versions of an object.

A wireless PDA-based client to access the world wide web is disclosed in the paper "Experience with a Wireless World Wide Web Client" published by Joel F. Bartlett of the Digital Equipment Corporation Western Research Laboratory. The PDA acts as a video text client, displaying screens representing a portion of a hypertext document. Each screen is identified with a tag that contains documents Universal Research Location and an offset within the document. In the simplest PDA based client when a hypertext link or scroll arrow is tapped by the user, the tag associated with the interactor is sent in a request to the workstation. The workstation obtains the document from the web, parses it (caching the result for later request), formats the desired screen for the PDA, and then replies to the PDA's request. In order to improve performance and allow operation without communications, a simple cache is added to the PDA-based client. Each time a screen description is received by the PDA, it is added to the cach.

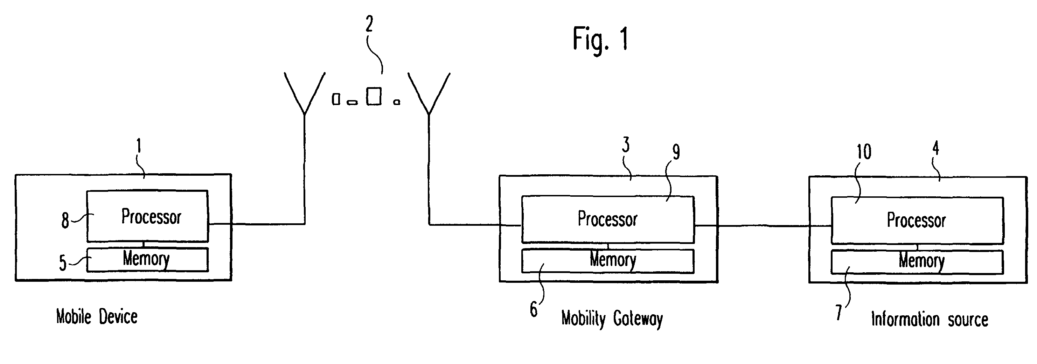

The technical background of the invention generally speaking is the field of distributed computing systems which are made up of a number of communication nodes interconnected by different kinds of networks. Objects, which can be for example a text file, an image file and/or a multimedia file, are transmitted along a transmission chain. As can be seen from figure 1, a transmission chain can f.e. comprise an information source (database) 4, a mobility gateway 3 and a mobile device 1 representing a data sink. For example objects supplied by the database 4 can be transmitted via the mobility gateway 3 and a wireless network 2 to the user of the mobile telecommunications device 1.

Caches are used to store objects at intermediate nodes (see f.e. the memory 6 of the mobility gateway 3) to reduce the transmission time between nodes. As can be seen from figure 1, some lines between two nodes (stages) of the transmission chain van present a low-bandwidth, as it is the case f.e. for the wireless network 2.

In contrast to wired networks, wireless networks provide rather small band width and much higher transmission cost. This leads to long delays when accessing information through wireless networks, especially when this information contains large objects like multimedia data (e. g. images). Said phenomenon is well known for example for the world wide web.

Usually the original data object of the information source has to be adapted for the technical capabilities (requirements) and/or the preferences of the user terminal.

A solution therefore is to transform objects into a variant of the object more suitable for the low-bandwidth link and the end-user terminal. Therefore, so called variants of the original objects have to be created and stored in the transmission chain. A variant in the sense of the present description is to be understood as an object said is derived from a original object by means of a transformation selected of a plurality of available transformations according to the requirements of the transmission and the end system terminal.

The above-mentioned principle will now be explained by means of an example. According to this example color images are stored in a data base and accessed by users. A transmission chain is established between said data base (representing a information source) and the terminal of said user (the terminal representing a data sink). For wireless communications, one node of this transmission chain is a so called mobility gateway representing a link between the user terminal and said information source. However, the information source and/or the mobility gateway has to take into account the technical capabilities and/or the preferences of the user terminal. As an example the user terminal can only be provided with a black and white screen. Therefore a variant of the original color object has to be derived, namely a black and white variant of the original color object. Therefore, the transformation will be a color reduction from a full colored image to a black and white image. Said transformation can take place in every node of the transmission chain, i. e. the information source, the mobility gateway and/or the user terminal. Usually the variant is created in the information source or the mobility gateway and than transmitted to the user terminal. However, the information linking the created and transformed variant to the original object is lost. This leads to problems regarding the capacity for example of a wireless network. For example said user terminal can at a first step demand for a black and white variant of the original color object. In a second step the user terminal can demand for a color reduced variant of the original full color object. According to the state of the art, however, as any information linking a already created variant to the original object is lost, the new variant as demanded by the user terminal has newly to be created for example in the information source or the mobility gateway, even though such a variant might already be present at said node of the transmission chain.

As explained above, when dealing with objects in a networked environment, such objects can be used in different formats. Object formats can be converted by applying some form of transformation. However, there are problems concerning the representation of the variants, the connection between original object and one or more variants and the handling of the variants at the end node and the intermediate nodes.

According to the state of the art there is no concept that can store various variants of the same object as a common logical object. Furthermore there is no reference from the variant to the original object and usually no description of the applied transformation available. As a result applications manipulating objects do not know about variants and cannot make use of it. This is especially a problem in wireless network where the network band width changes in wide ranges and the efforts spent to generate variants and keep track of the generated variants will result in better network utilization and fast transmissions.

A transformed object (variant) becomes subsequently a object of its own without any connection or reference to the original object. There is no known concept that can store various variants of the same original object as a common logical object without loosing a linking information.

According to the state of the art therefore, there is the problem that there is no possibility to efficiently store objects with variants derived therefrom.

It is therefore the object of the present invention to provide for a method and a device to efficiently store original objects and/or variants derived thereof.

The above object is solved in a method of storing data objects in a transmission chain comprising the features of the preamble of independent claim 1 by the features of the characterising part of independent claim 1.

Furthermore, the above object is solved in a device for storing data objects comprising the features of the preamble of independent claim 11 by the features of the characterising part of independent claim 11.

Further developments are defined in the dependent claims.

The method and the device according to the present invention permit
- storing objects together,
- keeping the connection between variants and information about the applied transformation (conversion), and
- preparing sets of variants for transmission and merging at a receiving node.

According to the central idea of the present invention said object is achieved by providing the original object and/or the variants derived thereof by an identification code. Variants belonging to the same set, i.e. variants derived directly or indirectly of the same object, are allocated to the same group which is called a family in the present description.

A method of storing data objects in a transmission chain is provided wherein an original data object from an information source and at least one variant derived thereof by predetermined transformation steps are stored in the same node or in different nodes of the transmission chain. The original object and the variants derived thereof are allocated to the same family. Furthermore, the original data object and the derived variants are provided with an identification code identifying the family, the original data object and the variant belongs to.

The variants can be provided with a conversion list representing the transformation steps by which the variants have been derived of the respective original object.

The original object can be provided with an origin information representing the fact that said object is an original object.

According to a preferred embodiment the origin information is represented by the fact, that the conversion list information of the original object is empty.

Each variant can be provided with conversion time information representing the time when the conversion has been effected.

The original object and the variants are provided with a variant list containing information regarding all variants of the same family stored of the same node of the transmission chain. Such a node of the transmission chain can be for example the information source, a mobility gateway and a user terminal, which can be for example a mobile device.

The transmission chain can comprise a wireless transmission. As stated above particularly in wireless networks there is the problem of rather small band width and high transmission costs. Therefore, in wireless networks there is particularly the need for an efficient representation and storing of original objects with variants.

For transmitting stored objects to another node of the transmission chain, a send-family to be transmitted can be created out of a family present in said sending node.

When a new object or a family of objects is received at a node of the transmission chain, it is treated as a so called receive-family, which can be melted with a family already present at said node in case the identification code of the receiving object is identical with said of said already present family.

The expressions "send-family" and "receive-family" therefore describe intermittently existing objects for deriving a subset of variants from the original family and for merging them with another family, respectively.

According to the present invention a transformation of a object can be applied in every node of the transmission chain and objects and variants can be stored in every node of the transmission chain, particularly in the intermediate nodes to save transmission and processing time.

Furthermore a device for storing data objects is provided. Thereby the device comprises means for storing at least one original data object and/or variants derived thereof by a predetermined transformation. Means is provided for allocating the original object the variants derived thereof to the same family. The original data object and the derived variants comprise an identification code identifying the family the respective original data object and the variant belongs to.

The variants can comprise a conversion list representing the transformation steps by which the variants have been derived of the respective original object.

The original object can comprise an origin information representing the fact that said object is an original object.

The origin information can be represented by an empty conversion list information.

Each variant can comprise a conversion time information representing the time when the conversion has been affected.

The origin object and/or the variant can comprise a variant list containing information regarding all variants of the same family stored in the same node of the transmission chain.

Means can be provided for receiving the at least one original data object and/or variants derived thereof via wireless transmission.

The device can be a mobile device, as for example a cellular telephone or notebook computer.

For a better understanding of the present invention embodiments of the invention will be explained with reference to the figures of the annexed drawings.
- Fig. 1: shows a transmission chain in which the present application can be applied,
- Fig. 2: shows a data storage format according to the present invention,
- Fig. 3: shows the creation transformation of a family of data objects according to the present invention, and
- Fig. 4: shows the preparation, transmission and creation (merging) of a family of data objects according to the present invention.

When dealing with objects in a network environment, such objects can be used in several different formats. Object formats can be converted by applying some form of transformation. Currently, information objects only exist in a single version. Transform object (a variant) becomes subsequently a object on its own without connection or reference to the original objects. By introducing variants of objects (in principle an arbitrary number of variants is possible) the necessity to manage them arises. The resulting problems are:
- representing the fact that two variants belong to the same set (called the family of an object) this is needed in the following cases:
   - to keep a family locally together,
   - to insert a variant that arrived over the network into an existing family that may already contain some variants or to create a new family if it is not yet existing,
- distinguishing two different variants of the same family, especially identifying the original object for example by an empty transformation list. This is needed in the following cases:
- to find the best fitting variant (s) for the given situation (e. g. for transmission) and
- to access the original object,
- know the transformation that was applied to the object. This is needed in the following cases:
   - a variant was created by applying a certain transformation. Later the original object was changed and it is desired to recreate the variant including the changes
   - at a later transmission the intermediately stored variants are reevaluated for suitability.

In Fig. 1 a transmission chain is shown comprising a plurality of nodes, i. e. an information source 4, a mobility gateway 3 and a mobile device such as a cellular telephone or a notebook computer 1. Each of the nodes 1, 3, 4 of the transmission chain comprises a processor and a memory. The information source 4 can be for example a data base. Such a data base stored in a memory 7 of the information source 4 can provide an original data object such as an image file. Said original data object from the information source 4 can either be transmitted to the mobility gateway 6 or be transformed by the processor 10 with in the information source 4.

The mobility gateway 3 receives either original data objects or variants derived thereof from the information source 4. The mobility gateway 3 also comprises a processor 9 to transform the received objects from the information source 4. When demanded the original data objects or the variants derived thereof from the mobility gateway 3 can be transmitted via wireless communication 2 to a mobile device 1.

The operation of the transmission chain shown in Fig. 1 will be explained in the following. It is assumed that the user of the mobile device 1 wants to receive an image object of a data base of the information source 4. The mobile device 1 will therefore send a request command via the wireless communication 2 and the mobility gateway 3 to the information source 4. The information source 4 will give the requested image object out of its memory 7 to the mobility gateway 3. The mobility gateway 3 will create variants of the original object from the information source 4 by a transformation selected of a plurality of available transformations according to the requirements of the transmission and the end system terminal.

It is to be noted that according to the present invention, each node of the transmission chain, whether it is an end node (information source 4 or mobile device 1 in figure 1) or an intermediate node (mobility gateway 3 in figure 1), can store objects and variants in the corresponding cache memory 5, 6 and 7, respectively. The cache memories 5, 6 and 7 reduce later transmission and processing time and therefore save costs, as the variants derived of an object are available even at an intermediate node.

Furthermore according to the present invention, every node can apply a transformation on an object by means of the corresponding one of the processors 8, 9 and 10, respectively.

Therefore time can be saved through preparing variants in advance during the time in which a node is inactive or when the available bandwidth is already full consumed.

Such transformation can be executed to adapt the received original data object to the preferences and technical capabilities of the mobile device 1. For example the processor 9 of the mobility gateway 6 can create a black and white variant out of a received original color data object. The mobility gateway 3 will then sent the variant, i. e. the black and white image file over the wireless communication 2 to the processor 8 of the mobile device 1. During the time in which the mobile device 1 is not requesting further data objects over the wireless communication 2 the processor 9 of the mobility gateway 6 can already prepare further variants out of the received original data object of information source 4 to be prepared for such a request from the mobile device 1. Therefore processing time can be saved, as the mobility gateway 3 can prepare such variants in advance and not only after such a request from the mobile device 1.

Of course new variants can also be created while transmitting another variant, as the transmission over a wireless network can take a long time.

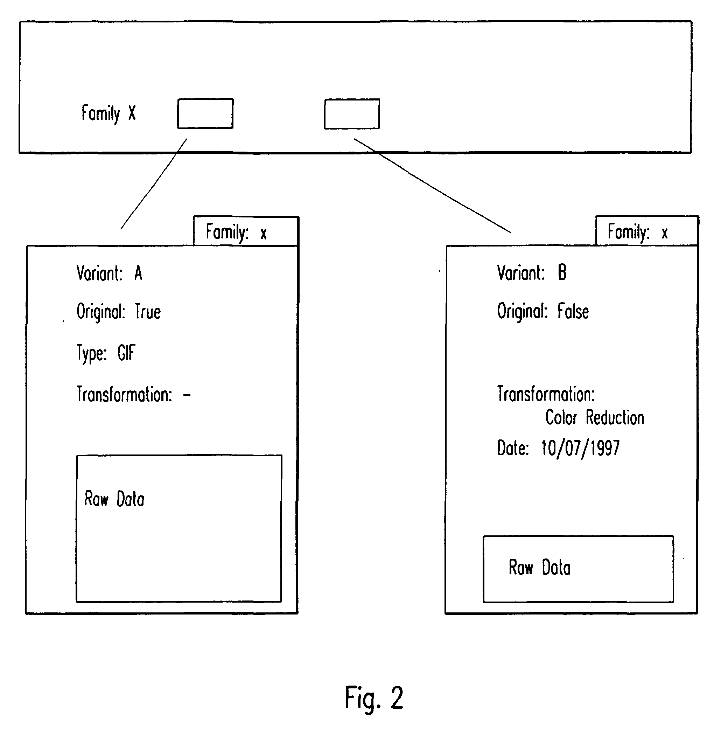

With reference to Fig. 2 it will now be explained how according to the present invention objects and variants derived thereof are handled and stored. Therefore first some terms are explained. An object according to the present invention are related information data containing the information of the wrapped object and some administration data. A variant is an object that is derived from an original object or this original object itself. A family is a collection of objects (variants) that are created from the same original object.

As can be seen from Fig. 2 an object (variant) according to the present invention consists the raw data (or a reference to it), that is the data of the wrapped objects (i. e. the JPEG file if the wrapped object is a JPEG image). Furthermore a type information is comprised that determines how the raw data has to be interpreted. According to the invention each object furthermore contains a reference to the family the object belongs to, i. e. a so called identification code. Furthermore each object (variant) comprises a conversion codelist that describes how this variant was produced from the original object. The original object furthermore comprises an origin information. As shown in Fig. 2 this origin information can be represented by an empty converting codelist. A transformed variant can furthermore comprise a time tag, i. e. the date when the listed transformation steps have been executed.

Actions on an object are: creation, reading the type of object, the raw data, the family and the conversion list as well as marshaling and unmarshaling.

As can be seen from Fig. 2 an original data object as well as the variants derived thereof are allocated to the same family x. The family field is an unique identifier that allows to find the original object and network. An object furthermore contains information regarding the type of the original object, in the example of figure 2 a GIF type, as well as a variant list referencing to objects that are produced by converting the original object and which are available at this node of the transmission chain.

Actions on a family are for example: creation, reading object attributes (like the identification code, the original type and the variant list), insertion of new elements, listing of variants and deletion of existing variants. Of course all other commonly used actions on data objects are also possible.

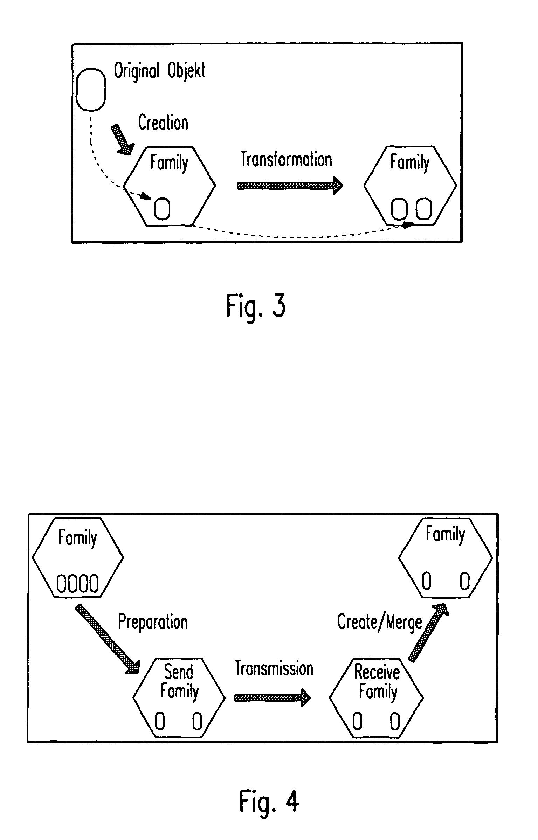

With reference to Fig. 3 and Fig. 4 the use of the inventive object structure will now be explained.

As can be seen from Fig. 3 first a family is created. Doing so the origin type information and the identification code are supplied and set. Next an object or a variant can be created and inserted in an existing family. Variants are derived from the original data object through applying some transformation steps (e. g. the translation of a text into another language). The transformation may change the format and reduce the size of the object. Information about the transformation is stored with the variants in a transformation (conversion) list. Said transformation list is used to describe the variant and to re-compute a variant if necessary.

With reference to Fig. 4 it is now explained how a family is transmitted according to the present invention.

The expressions "send-family" and "receive-family" are used for objects that are derived from a family and used for the manipulation of the object structure. As can be seen from Fig. 4, to prepare a family for transmitting, a send-family object is derived from the original object. From the send-family object, variants can be deleted without effecting the original family. A send-family object can than be marshaled and transmitted over the network. This means all fields of the objects and all objects that are referred to in the variant list are collected into a flat buffer so that it can be send out. On the receiver side, this information is restored and the received family object is created. In case there is a family on the receiver side with the same identification code, the received family is merged with this family. All objects that are not yet part of the family but of the received family become members of the family and the received family is no longer needed. If no family with the same identification code exists, the receive family is transformed to a new family.

A cache can use the described technique for a more intelligent management of objects, because several variants of an object might be available. The cache can use the additional information of variants to come to a decision. In case e. g. the cache has to decide to delete an object a or an object b, the cache can easily chose to delete a because it has another variant of a but not of b, or, because a is a worse variant of b.

A general advantage of the inventive technique is the relation between the variants is expressed on the object level and not on the description level above the object level. An object itself already contains the necessary information to reach the wrapping family and thus other available variants.

Unlike other techniques this inventive technique is also not limited to image objects, but can deal with any object type from which variants can be created. Additionally, there is no limit for the number of variants. The difference to other techniques is furthermore that the variants already have the information how they differ among each other on a more detailed degree than only the type information of the object. According to the invention there is no need to examine the objects to find this out. Finally the described inventive technique not only allows the managing of variants of objects, but does this in a convenient and safe (in the sense of not error prone) way.

## Claims

1. Method of storing data objects in a transmission chain comprising a plurality of nodes, at least some nodes having different technical capabilities and being interconnected by different kinds of networks having different bandwidth, wherein an original data object from an information source (4) and at least one variant derived (8, 9, 10) thereof by at least one transformation step are stored (5, 6, 7) in the same node or in different nodes (1, 3, 4) of the transmission chain, the variant being an object derived from said original data object by means of a transformation selected of a plurality of available transformations according to the requirements of the different kinds of networks and the different technical capabilities of the nodes,
**characterised in that**
the original object and the variant derived thereof are allocated to the same family, and that the original data object and the derived variant are provided with an identification code identifying the family the original data object and the variant belongs to.

2. Method according to claim 1,
further **characterised in that**
the variants are respectively provided with a conversion list representing the transformation steps by which the variants have been derived of the respective original object.

3. Method according to claim 1 or 2,
further **characterised in that**
the original object is provided with an origin information representing the fact that said object is an original object.

4. Method according to claim 3,
further **characterised in that**
the origin information is represented by an empty conversion list information.

5. Method according to anyone of the preceding claims,
further **characterised in that**
each variant is provided with conversion time information representing the time when the conversion has been effected.

6. Method according to anyone of the preceding claims,
further **characterised in that**
a variant list is provided in a node (1, 3, 4) of the transmission chain containing information regarding all variants of the same family stored in the same node of the transmission chain.

7. Method according to anyone of the preceding claims,
further **characterised in that**
the transmission chain comprises a wireless transmission (2).

8. Method according to anyone of the preceding claims,
further **characterised in that**
for transmitting stored objects to another node of the transmission chain, a send-family to be transmitted is created out of a present family.

9. Method according to claim 8,
further **characterised in that**
when a new object(s) is received at a node of the transmission chain, it is melted with a family already present at said node in case the identification code of the received object(s) is/are identical with that of said already present family.

10. Method according to anyone of the preceding claims,
further **characterised in that**
a transformation of a object can be applied in every node of the transmission chain.

11. Device for storing data objects,
wherein the device (1, 3, 4) is adapted to be used in a transmission chain comprising a plurality of devices (1, 3, 4), at least some devices having different technical capabilities and being interconnected by different kinds of networks having different bandwidth, the device (1, 3, 4) comprising means (5, 6, 7) for storing at least one original data object and/or variants derived thereof by a predetermined transformation, the variant being an object derived from said original data object by means of a transformation selected of a plurality of available transformations according to the requirements of the different kinds of networks and the different technical capabilities of the devices,
**characterised in that**
means (8, 9, 10) is provided in the device for allocating the original object and the variant derived thereof to the same family, and that the original data object and the derived variant comprise an identification code identifying the family the respective original data object and the variant belongs to.

12. Device according to claim 11,
further **characterised in that**
the variants respectively comprise a conversion list representing the transformation steps by which the variants have been derived of the respective original object.

13. Device to anyone of claim 11 or 12,
further **characterised in that**
the original object comprises an origin information representing the fact that said object is an original object.

14. Device according to claim 13,
further **characterised in that**
the origin information is represented by an empty conversion list information.

15. Device according to anyone of claims 11 to 14,
further **characterised in that**
each variant comprises a conversion time information representing the time when the conversion has been effected.

16. Device according to anyone of claims 11 to 15,
further **characterised in that**
a variant list is provided containing information regarding all variants of the same family stored in the same node (1, 3, 5) of the transmission chain.

17. Device according to anyone of claims 11 to 16,
further **characterised by**
a means (8) for receiving the at last one original data object and/or variants derived thereof via wireless transmission (2).

18. Device according to claim 17,
further **characterised in that**
the device is a mobile device (1).

## Patentansprüche

1. Verfahren zum Speichern von Datenobjekten in einer Übertragungskette, die eine Vielzahl von Knoten umfasst, von denen zumindest einige Knoten unterschiedliche technische Fähigkeiten aufweisen und durch unterschiedliche Arten von Netzwerken miteinander verbunden sind, welche unterschiedliche Bandbreiten aufweisen,
wobei ein Original-Datenobjekt von einer Informationsquelle (4) und zumindest eine davon durch zumindest einen Transformationsschritt abgeleitete Variante (8, 9, 10) in demselben Knoten oder in verschiedenen Knoten (1, 3, 4) der Übertragungskette gespeichert (5, 6, 7) werden,
wobei die Variante ein Objekt ist, welches von dem genannten Original-Datenobjekt mittels einer Transformation abgeleitet ist, die aus einer Vielzahl von verfügbaren Transformationen entsprechend den Anforderungen der verschiedenen Arten von Netzwerken und den verschiedenen technischen Fähigkeiten der Knoten ausgewählt ist,
**dadurch gekennzeichnet, dass** das Original-Objekt und die davon abgeleitete Variante derselben Familie zugewiesen werden
und dass das Original-Datenobjekt und die abgeleitete Variante mit einem Identifikationscode versehen werden, der die Familie identifiziert, zu der das Original-Datenobjekt und die Variante gehören.

2. Verfahren nach Anspruch 1, ferner
**dadurch gekennzeichnet, dass** die Varianten jeweils mit einer Umsetzungsliste versehen werden, welche die Transformationsschritte darstellt, durch welche die Varianten von dem Original-Objekt abgeleitet worden sind.

3. Verfahren nach Anspruch 1 oder 2, ferner
**dadurch gekennzeichnet, dass** das Original-Objekt mit einer Ursprungsinformation versehen wird, welche die Tatsache angibt, dass das betreffende Objekt ein Original-Objekt ist.

4. Verfahren nach Anspruch 3,
**dadurch gekennzeichnet, dass** die Original-Information durch eine leere Umsetzungslisteninformation dargestellt wird.

5. Verfahren nach einem der vorhergehenden Ansprüche, ferner
**dadurch gekennzeichnet, dass** jede Variante mit einer Umsetzungszeitinformation versehen wird, welche die Zeit angibt, zu der die Umsetzung bewirkt worden ist.

6. Verfahren nach einem der vorhergehenden Ansprüche, ferner
**dadurch gekennzeichnet, dass** in einem Knoten (1, 3, 4) der Übertragungskette eine Variantenliste vorgesehen wird, die eine Information bezüglich sämtlicher Varianten derselben Familie enthält, welche in demselben Knoten der Übertragungskette gespeichert wird bzw. ist.

7. Verfahren nach einem der vorhergehenden Ansprüche, ferner
**dadurch gekennzeichnet, dass** die Übertragungskette eine drahtlose Übertragung (2) umfasst.

8. Verfahren nach einem der vorhergehenden Ansprüche, ferner
**dadurch gekennzeichnet, dass** zur Übertragung von gespeicherten Objekten zu einem anderen Knoten der Übertragungskette eine zu übertragende Sende- bzw. Übertragungsfamilie aus der vorliegenden Familie erzeugt wird.

9. Verfahren nach Anspruch 8, ferner
**dadurch gekennzeichnet, dass** dann, wenn ein neues Objekt bzw. neue Objekte in einem Knoten der Übertragungskette empfangen werden, dieses bzw. diese mit einer in dem betreffenden Knoten bereits vorhandenen Familie in dem Fall verschmolzen wird bzw. werden, dass der Identifikationscode des empfangenen Objekts bzw. der empfangenen Objekte identisch ist mit jenem der betreffenden bereits vorhandenen Familie.

10. Verfahren nach einem der vorhergehenden Ansprüche, ferner
**dadurch gekennzeichnet, dass** eine Transformation eines Objekts in jedem Knoten der Übertragungskette angewendet werden kann.

11. Vorrichtung zum Speichern von Datenobjekten, wobei die Vorrichtung (1, 3, 4) für die Verwendung in einer Übertragungskette geeignet ist, welche eine Vielzahl von Vorrichtungen (1, 3, 4) umfasst, von denen zumindest einige Vorrichtungen unterschiedliche technische Fähigkeiten aufweisen und durch unterschiedliche Arten von Netzwerken miteinander verbunden sind, die unterschiedliche Bandbreite besitzen,
wobei die Vorrichtung (1, 3, 4) Mittel bzw. Einrichtungen (5, 6, 7) zum Speichern zumindest eines Original-Datenobjekts und/oder von davon durch eine bestimmte Transformation abgeleiteten Varianten aufweist,
und wobei die Variante ein Objekt ist, welches aus dem Original-Datenobjekt mittels einer Transformation abgeleitet ist, die aus einer Vielzahl von verfügbaren Transformationen entsprechend den Anforderungen der verschiedenen Arten von Netzwerken und den verschiedenen technischen Fähigkeiten der Vorrichtungen ausgewählt ist,
**dadurch gekennzeichnet, dass** in der Vorrichtung Mittel bzw. Einrichtungen (8, 9, 10) vorgesehen sind für eine Zuteilung des Original-Objekts und der davon abgeleiteten Variante zur selben Familie
und dass das Original-Datenobjekt und die abgeleitete Variante einen Identifikationscode umfassen, der die Familie identifiziert, zu der das betreffende Original-Datenobjekt und die Variante gehören.

12. Vorrichtung nach Anspruch 11, ferner
**dadurch gekennzeichnet, dass** die Varianten jeweils eine Umsetzungsliste umfassen, welche die Transformationsschritte angibt, durch die die Varianten von dem jeweiligen Original-Objekt abgeleitet worden sind.

13. Vorrichtung nach Anspruch 11 oder 12, ferner
**dadurch gekennzeichnet, dass** das Original-Objekt eine Ursprungsinformation umfasst, welche die Tatsache angibt, dass das betreffende Objekt ein Original-Objekt ist.

14. Vorrichtung nach Anspruch 13, ferner
**dadurch gekennzeichnet, dass** die Ursprungsinformation durch eine leere Umsetzungslisteninformation dargestellt ist.

15. Vorrichtung nach einem der Ansprüche 11 bis 14, ferner
**dadurch gekennzeichnet, dass** jede Variante eine Umsetzungszeitinformation enthält, welche die Zeit angibt, zu der die Umsetzung bewirkt worden ist.

16. Vorrichtung nach einem der Ansprüche 11 bis 15, ferner
**dadurch gekennzeichnet, dass** eine Variantenliste vorgesehen ist, welche eine Information bezüglich sämtlicher Varianten derselben Familie enthält, die in demselben Knoten (1, 3, 5) der Übertragungskette gespeichert sind.

17. Vorrichtung nach einem der Ansprüche 11 bis 16, ferner
**dadurch gekennzeichnet, dass** eine Einrichtung (8) für einen Empfang des zumindest einen Original-Objekts und/oder der davon abgeleiteten Varianten durch eine drahtlose Übertragung (2) vorgesehen ist.

18. Vorrichtung nach Anspruch 17, ferner
**dadurch gekennzeichnet, dass** die Vorrichtung eine mobile Vorrichtung (1) ist.

## Revendications

1. Procédé de stockage d'objets de données dans une chaîne de transmission comprenant une pluralité de noeuds, au moins certains noeuds ayant des capacités techniques différentes et étant interconnectés par des sortes différentes de réseaux ayant des largeurs de bande différentes, où un objet de données initial venant d'une source d'informations (4) et au moins une variante déduite (8, 9, 10) de celui-ci par au moins une opération de transformation sont stockés (5, 6, 7) dans le même noeud ou dans des noeuds différents (1, 3, 4) de la chaîne de transmission, la variante étant un objet déduit dudit objet de données initial au moyen d'une transformation sélectionnée parmi plusieurs transformations disponibles en fonction des exigences des sortes différentes de réseaux et des capacités techniques différentes des noeuds,
**caractérisé en ce que** :
l'objet initial et la variante déduite de celui-ci sont affectés à la même famille, et l'objet de données initial et la variante déduite sont dotés d'un code d'identification qui identifie la famille à laquelle l'objet de données initial et la variante appartiennent.

2. Procédé selon la revendication 1, **caractérisé en outre en ce que** :
les variantes sont respectivement dotées d'une liste de conversion représentant les opérations de transformation par lesquelles les variantes ont été déduites de l'objet initial respectif.

3. Procédé selon la revendication 1 ou 2, **caractérisé en outre en ce que** :
l'objet initial est doté d'une information d'origine représentant le fait que ledit objet est un objet initial.

4. Procédé selon la revendication 3, **caractérisé en outre en ce que** :
l'information d'origine est représentée par une information constituée d'une liste de conversion vide.

5. Procédé selon l'une quelconque des revendications précédentes, **caractérisé en outre en ce que** :
chaque variante est dotée d'une information temporelle de conversion représentant le moment où la conversion a été effectuée.

6. Procédé selon l'une quelconque des revendications précédentes, **caractérisé en outre en ce que** :
une liste de variantes est produite dans un noeud (1, 3, 4) de la chaîne de transmission contenant des informations se rapportant à toutes les variantes de la même famille stockées dans le même noeud de la chaîne de transmission.

7. Procédé selon l'une quelconque des revendications précédentes, **caractérisé en outre en ce que** :
la chaîne de transmission comprend une transmission sans fil (2).

8. Procédé selon l'une quelconque des revendications précédentes, **caractérisé en outre en ce que** :
pour transmettre des objets stockés à un autre noeud de la chaîne de transmission, une famille d'envoi à transmettre est créée à partir d'une famille présente.

9. Procédé selon la revendication 8, **caractérisé en outre en ce que** :
lorsque un ou des nouveaux objets sont reçus en un noeud de la chaîne de transmission, celui-ci ou ceux-ci sont mélangés avec une famille déjà présente dans ledit noeud dans le cas où le code d'identification de l'objet ou des objets reçus sont identiques à celui de ladite famille déjà présente.

10. Procédé selon l'une quelconque des revendications précédentes, **caractérisé en outre en ce que** :
la transformation d'un objet peut être appliquée dans tout noeud de la chaîne de transmission.

11. Dispositif destiné à stocker des objets de données,
où le dispositif (1, 3, 4) est destiné à être utilisé dans une chaîne de transmission comprenant une pluralité de dispositifs (1, 3, 4), au moins certains dispositifs ayant des capacités techniques différentes et étant interconnectés par des sortes différentes de réseaux ayant des largeurs de bande différentes, le dispositif (1, 3, 4) comprenant des moyens (5, 6, 7) servant à stocker au moins un objet de données initial et, ou bien, des variantes déduites de celui-ci par une transformation prédéterminée, la variante étant un objet déduit dudit objet de données initial au moyen d'une transformation choisie parmi une pluralité de transformations disponibles en fonction des exigences des sortes différentes de réseaux et des capacités techniques différentes des dispositifs,
**caractérisé en ce que** :
un moyen (8, 9, 10) est prévu dans le dispositif pour affecter l'objet initial et la variante déduite de celui-ci à la même famille, et l'objet de données initial et la variante déduite comprennent un code d'identification identifiant la famille à laquelle l'objet de données initial et la variante appartiennent.

12. Dispositif selon la revendication 11, **caractérisé en outre en ce que** :
les variantes sont respectivement dotées d'une liste de conversion représentant les opérations de transformation par lesquelles les variantes ont été déduites de l'objet initial respectif.

13. Dispositif selon la revendication 11 ou 12, **caractérisé en outre en ce que** :
l'objet initial comprend une information d'origine représentant le fait que ledit objet est un objet initial.

14. Dispositif selon la revendication 13, **caractérisé en outre en ce que** :
l'information d'origine est représentée par une information constituée d'une liste de conversion vide.

15. Dispositif selon l'une quelconque des revendications 11 à 14, **caractérisé en outre en ce que** :
chaque variante est dotée d'une information temporelle de conversion représentant le moment où la conversion a été effectuée.

16. Dispositif selon l'une quelconque des revendications 11 à 15, **caractérisé en ce que** :
une liste de variantes est prévue, qui contient des informations concernant toutes les variantes de la même famille stockées dans le même noeud (1, 3, 5) de la chaîne de transmission.

17. Dispositif selon l'une quelconque des revendications 11 à 16, **caractérisé en outre par** :
un moyen (8) destiné à recevoir ledit au moins un objet des données initial et, ou bien, des variantes déduites de celui-ci par l'intermédiaire d'une transmission sans fil (2).

18. Dispositif selon la revendication 17, **caractérisé en outre en ce que** :
le dispositif est un dispositif mobile (1).
